# EUROPÄISCHE PATENTSCHRIFT

(11) **EP 2 179 381 B1**
(45) Veröffentlichungstag und Bekanntmachung des Hinweises auf die Patenterteilung: **24.06.2015**
(21) Anmeldenummer: 08775189.7
(22) Anmeldetag: 17.07.2008
(51) Int. Cl.: G06K 9/00, G06K 9/68

(54) **VERFAHREN UND VORRICHTUNG ZUR VERKEHRSZEICHENERKENNUNG**
METHOD AND APPARATUS FOR RECOGNIZING TRAFFIC SIGNS
PROCÉDÉ ET DISPOSITIF SERVANT À LA RECONNAISSANCE DE PANNEAUX DE SIGNALISATION ROUTIÈRE

(30) Priorität: 24.07.2007 DE 102007034505
(43) Veröffentlichungstag der Anmeldung: 28.04.2010
(73) Patentinhaber: Hella KGaA Hueck & Co., 59552 Lippstadt (DE)
(72) Erfinder: BECKER, Lars-Peter, 13156 Berlin (DE)
(74) Vertreter: Schaumburg & Partner Patentanwälte (GbR)
(86) Internationale Anmeldenummer: PCT/EP2008/059409
(87) Internationale Veröffentlichungsnummer: WO 2009/013223

(56) Entgegenhaltungen:
- DE-A1- 19 938 256
- JP-A- 59 109 978
- "The Road Sign Recognition System - RS2" INTERNET CITATION, [Online] XP002135353 Gefunden im Internet: URL:http://euler.fd.cvut.cz/research/rs2/r s2algorithm.html> [gefunden am 2000-04-11]

## Beschreibung

Die Erfindung betrifft ein Verfahren und eine Vorrichtung zur Verkehrszeichenerkennung, bei denen die Erkennung eines Verkehrszeichens unter Verwendung eines Klassifizierungsmerkmals und/oder eines Klassifizierungsverfahrens durchgeführt wird.

Die Merkmale und Ausprägungen bekannter Verkehrszeichen in unterschiedlichen Ländern sind trotz einer Normung durch die Wiener Konvention sehr unterschiedlich. Daher sollten zur Klassifizierung von Verkehrszeichen auch länderspezifische Klassifizierungsmerkmale oder Länderspezifische Klassifizierungsverfahren genutzt werden, um eine hohe Erkennungsqualität zu erreichen. Mit einer einzigen Detektions- und Klassifizierungsstrategie können insbesondere nicht alle Besonderheiten von Verkehrszeichen ausreichend berücksichtigt werden, die in den Ländern der Europäischen Union vorkommen. Insbesondere unterscheiden sich einzelne Verkehrszeichen bei Linksverkehr und bei Rechtsverkehr, wie beispielsweise Überholverbotszeichen. In Ländern außerhalb der Europäischen Union sind weitere Ausprägungen sowie andere Arten von Verkehrszeichen möglich und üblich.

Aus dem Dokument DE 199 38 256 A ist bekannt, dass länderspezifische Templates auf Datenträgerwechselmedien gespeichert werden. Dadurch soll es möglich sein, dass länderspezifische Datenträger mit entsprechenden Templates für die Deutung von Verkehrszeichen im Ausland nach Wunsch eingelegt und eingelesen werden können. So kann beispielsweise bei einer Urlaubsreise in entsprechende Länder mit Abweichungen von der inländischen Norm der Verkehrszeichen eine Deutung ohne weiteres und ohne Schwierigkeiten erfolgen, weil auf den Datenträgern die entsprechenden Templates für das besagte Ausland abgespeichert sind.

Aufgabe der Erfindung ist es, ein Verfahren und eine Vorrichtung anzugeben, durch die auch im grenzüberschreitenden Verkehr Verkehrszeichen sicher erkannt werden können.

Diese Aufgabe wird jeweils durch ein Verfahren mit den Merkmalen des Patentanspruchs 1 sowie durch eine Vorrichtung mit den Merkmalen des Patentanspruchs 12 gelöst. Vorteilhafte Weiterbildungen der Erfindung sind in den abhängigen Patentansprüchen angegeben.

Bei der Erfindung wird ein signifikantes Merkmal ermittelt, das für mehrere für diese Region standardisierte Verkehrszeichen signifikant ist. Alternativ oder zusätzlich kann für mehrere für diese Region standardisierte Verkehrszeichen jeweils ein signifikantes Merkmal ermittelt werden, wobei die Verkehrszeichen vorzugsweise voneinander verschiedene Rechtsvorschriften angeben.

Ferner kann für mindestens zwei Verkehrszeichen mindestens jeweils ein für dieses jeweilige Verkehrszeichen signifikantes Merkmal ermittelt werden. Die Region wird dann mit Hilfe der ermittelten Merkmale bestimmt.

Als signifikantes Merkmal kann insbesondere die Größe des Verkehrszeichens, die Schriftart, Symbolausprägungen (z.B. bei Gefahrenzeichen, Ortseingangszeichen, usw.) und/oder die Größe von Zeichen, die auf dem Verkehrszeichen dargestellt sind, mindestens eine Farbe, eine Reflektionseigenschaft und/oder mindestens eine Eigenschaft des Haltemittels zum Halten des Verkehrszeichens genutzt werden. Beispielsweise kann die Farbe und/oder die Ausführung einer Haltestange als signifikantes Merkmal genutzt werden, mit dem das Verkehrszeichen am Straßenrand aufgestellt ist. Ferner können auch Schilderbrücken, Lichtzeichenanlagen, an denen Verkehrszeichen befestigt sind und/oder Straßenbeleuchtungseinrichtungen, an denen Verkehrszeichen befestigt sind, als signifikantes Merkmal genutzt werden.

Vorteilhaft ist es auch, wenn ausgehend von bereitgestellten Bilddaten mindestens eines Bildes mit einer Abbildung mindestens eines Bereichs der Umgebung eines Fahrzeugs mindestens ein in diesem Bereich vorhandenes Verkehrszeichen ermittelt wird. Das Verkehrszeichen kann dann mit Hilfe eines Klassifizierungsverfahrens zum Klassifizieren der Region klassifiziert werden. Somit kann die Verkehrszeichenerkennung und die Bestimmung der Region mit Mitteln erfolgen, die in einem Fahrzeug, insbesondere einem Kraftfahrzeug, wie einem PKW, einem LKW oder einem Motorrad, integriert sind.

Bei einer Verarbeitung der bereitgestellten Bilddaten kann das Verkehrszeichen als Objekt detektiert und mit Hilfe eines Vorklassifizierungsverfahrens als Verkehrszeichen vorklassifiziert werden. Das Objekt bzw. Verkehrszeichen wird dabei vorzugsweise über mehrere Bilder nachverfolgt. Zum Nachverfolgen kann beispielsweise ein bekanntes Tracking-Verfahren genutzt werden.

Die Region kann ein oder mehrere Länder bzw. Staaten, ein oder mehrere Bundesländer, einen oder mehrere Bundesstaaten, ein oder mehrere Kantone und/oder eine oder mehrere andere Verwaltungseinheiten mit mindestens einem speziell für diese Verwaltungseinheit spezifizierten Verkehrszeichen sein.

Ferner ist es vorteilhaft, eine Region voreinzustellen, und ausgehend von der voreingestellten Region mindestens ein für die voreingestellte Region spezifiziertes Klassifizierungsmerkmal und/oder mindestens ein für die voreingestellte Region spezifiziertes Klassifizierungsverfahren zur Erkennung des und/oder mindestens eines weiteren Verkehrszeichens zu verwenden. Vorzugsweise wird zum Klassifizieren und zum Erkennen des Verkehrszeichens jeweils eine Wahrscheinlichkeit für mehrere mögliche Verkehrszeichen ermittelt, wobei die Wahrscheinlichkeit angibt, inwieweit dieses mögliche Verkehrszeichen tatsächlich das zu klassifizierende Verkehrszeichen ist.

Ferner kann für mehrere Bilder einer Bildfolge mit nacheinander aufgenommenen Bildern jeweils die Wahrscheinlichkeit für mehrere mögliche Verkehrszeichen ermittelt werden. Somit wird für jedes mögliche Verkehrszeichen wiederholt eine Wahrscheinlichkeit bestimmt, wobei ausgehend von dem für jedes Verkehrszeichen für die einzelnen Bilder ermittelten Einzelwahrscheinlichkeiten eine Gesamtwahrscheinlichkeit ermittelt werden kann, durch die eine sichere Erkennung des Verkehrszeichens möglich ist.

Die Verfahrensschritte zum Bestimmen der Region werden bei Ausführungsformen der Erfindung nur dann ausgeführt, wenn die ermittelten Wahrscheinlichkeiten für ein konkretes Verkehrszeichen und/oder für mehrere Verkehrszeichen einen voreingestellten Grenzwert vorzugsweise wiederholt unterschreiten. Ferner können die Verfahrensschritte bei diesen und/oder weiteren Ausführungsformen der Erfindung in Zeiträumen ausgeführt werden, in denen keine Verkehrszeichen klassifiziert werden. Dies ist insbesondere dann der Fall, wenn bereitgestellte Bilddaten keine Abbildungen eines oder mehrerer Verkehrszeichen umfassen bzw. ein Vorklassifizierungsverfahren und/oder ein Objekterkennungsverfahren kein Verkehrszeichen bei der Verarbeitung der bereitgestellten Bilddaten ermitteln kann.

Ferner können für mindestens zwei voneinander verschiedene Regionen der jeweiligen Region zugeordnete Daten gespeichert werden, wobei nur die Daten zur Klassifizierung des Verkehrszeichens genutzt und/oder geladen werden, die der festgelegten Region zugeordnet sind, wobei vorzugsweise für jede Region ein Datensatz gespeichert wird, der bei einer Auswahl bzw. Voreinstellung dieser Region zum Klassifizieren von Verkehrszeichen genutzt wird.

Ferner kann für mindestens zwei Regionen jeweils die Wahrscheinlichkeit ermittelt werden, ob es sich aufgrund der ermittelten Merkmale um diese Region handelt, wobei vorzugsweise die Region mit der höchsten ermittelten Wahrscheinlichkeit als aktuelle Region voreingestellt wird.

Ferner kann ein bereits mit einer voreingestellten ersten Region klassifiziertes Verkehrszeichen erneut mit einer weiteren voreingestellten zweiten Region bzw. mit den diesen Regionen zugeordneten Klassifizierungsmerkmalen und/oder Klassifizierungsverfahren klassifiziert werden. Dabei wird überprüft, ob das Verkehrszeichen bei der Klassifizierung mit der weiteren zweiten voreingestellten Region mit einer höheren Wahrscheinlichkeit als ein konkretes Verkehrszeichen klassifiziert wird als beim Klassifizieren mit der ersten voreingestellten Region. Dieses wiederholte Klassifizieren des Verkehrszeichens wird vorzugsweise mit denselben bereitgestellten Bilddaten durchgeführt, wobei das wiederholte Klassifizieren des Verkehrszeichens vorzugsweise in einem Zeitraum durchgeführt wird, in dem keine weiteren Verkehrszeichen zu klassifizieren sind, insbesondere dann, wenn bei der Verarbeitung bereitgestellte Bilddaten keine Verkehrszeichen detektiert werden.

Ferner kann bei der Erkennung eines für eine Region spezifizierten Verkehrszeichens diese Region für das Klassifizieren weiterer Verkehrszeichen voreingestellt werden. Dieses Verkehrszeichen kann beispielsweise eine Informationstafel an einer Grenzübergangsstelle sein. Diese Informationstafeln unterscheiden sich für verschiedene Länder insbesondere durch eine auf der Informationstafel enthaltene Länderkennung. In der Straßenverkehrsordnung der Bundesrepublik Deutschland ist ein solches Verkehrszeichen als "Informationstafel an Grenzübergangsstellen" als Zeichen 393 enthalten.

Die Region kann auch aufgrund mehrerer ein für eine bestimmte Region spezifisches Merkmal aufweisenden Verkehrszeichen bestimmt werden, um die Erkennungsgüte beim Erkennen bzw. Bestimmen der Region zu erhöhen.

Die Vorrichtung mit den Merkmalen des Patentanspruchs 12 kann auf die gleiche Weise weitergebildet werden wie für das Verfahren nach dem Patentanspruch 1 angegeben. Insbesondere kann die Vorrichtung mit den zur Weiterbildung des Verfahrens nach dem Patentanspruch 1 in den jeweiligen abhängigen Patentansprüchen angegebenen Merkmalen bzw. entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand eines Ausführurigsbeispiels näher erläutert.

Es zeigen:
- Figur 1: ein Blockdiagramm eines Systems zur Bildaufnahme und Bildauswertung der Umgebung eines Kraftfahrzeugs;
- Figur 2: ein Blockdiagramm mit Funktionsblöcken zum Durchführen einer länderspezifischen Verkehrszeichenerkennung gemäß einer ersten Ausführungsform der Erfindung; und
- Figur 3: ein Blockdiagramm mit Funktionsblöcken zum Durchführen einer länderspezifischen Verkehrszeichenerkennung gemäß einer zweiten Ausführungsform der Erfindung.

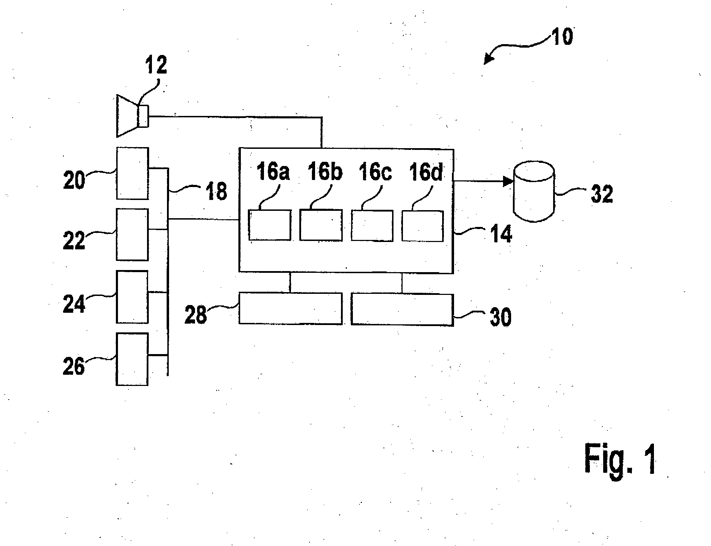

In Fig. 1 ist ein Blockdiagramm eines Bildaufnahme- und Auswertesystems 10 dargestellt, das in ein Kraftfahrzeug, insbesondere in einen PKW oder einen LKW, integriert ist. Das Bildaufnahme- und Auswertesystem 10 umfasst ein Kamerasystem 12, das eine Bildfolge mit Abbildungen zumindest eines Bereichs vor dem Fahrzeug erfasst und jeweils entsprechende Bilddaten erzeugt. Diese Bilddaten werden zu einer Bildverarbeitungseinheit 14 des Systems 10 übertragen und mit Hilfe von Steuerungs- und Verarbeitungsmodulen 16a bis 16d der Bildverarbeitungseinheit 14 analysiert und verarbeitet.

Die Bildverarbeitungseinheit 14 ist über einen Fahrzeugbus 18 des Fahrzeugs mit weiteren Steuer- und Verarbeitungseinheiten 20 bis 26, wie dem Navigationssystem, dem Geschwindigkeitserfassungs- und/oder Regelungssystem, des Fahrzeugs verbunden, wobei die Bildverarbeitungseinheit 14 über den Fahrzeugbus 18 Daten mit diesen weiteren Steuereinheiten 20 bis 26 austauschen kann. Die Bildverarbeitungseinheit 14 ist weiterhin über eine geeignete Datenleitung mit einer Anzeige- und Warneinheit 28 sowie mit einer Geschwindigkeitsregel- und/oder Begrenzungssteuerung 30 verbunden. Ferner ist die Bildverarbeitungseinheit 14 über eine Datenleitung mit einem Permanentspeicher 32 verbunden. Ein solcher Permanentspeicher 32 kann beispielsweise ein Festplattenspeicher, ein Flashspeicher oder eine weitere Steuereinheit sein. Ferner kann der Permanentspeicher 32 auch durch ein Datenbanksystem des Kraftfahrzeugs bereitgestellt werden. Das Kamerasystem 12 kann eine Monokamera, mehrere Monokameras, ein Stereokamerasystem und/oder mehrere Stereokamerasysteme umfassen, wobei die einzelnen Kameras Graustufenbilder oder Farbbilder erzeugen. Als Fahrzeugbus 18 können übliche bekannte Bussysteme, wie ein LIN-Bus, ein CAN-Bus und/oder ein Flexray-Bus, eingesetzt werden. Die Optiken der Kamera bzw. der Kameras des Kamerasystems 12 können insbesondere verschiedene Festbrennweiten oder eine insbesondere über ein Revolver-Objektivsystem oder ein Varioobjektivsystem einstellbare Brennweite aufweisen.

Über den Fahrzeugbus 18 kommuniziert die Bildverarbeitungseinheit 14 auch mit weiteren Sensoren und Empfangseinheiten, die insbesondere eine ad hoc Kommunikation mit weiteren Fahrzeugen und/oder mit Verkehrseinrichtungen, wie Lichtsignalanlagen, Schilderbrücken und/oder einzelnen Verkehrsschildern, aufnehmen können. Ferner werden über den Fahrzeugbus 18 Informationen über Signalzustände einzelner Aktoren und Sensoren, insbesondere über die Aktivierung der Fahrtrichtungsanzeiger des Fahrzeugs, übertragen.

Mit Hilfe der durch das Kamerasystem 12 aufgenommenen Bildfolge werden durch eine Analyse der Bilddaten mit Hilfe der Bildverarbeitungseinheit 14 die Verkehrszeichen im Erfassungsbereich des Kamerasystems 12 detektiert und klassifiziert. Durch das Klassifizieren der Verkehrszeichen mit Hilfe eines geeigneten Erkennungsverfahrens wird das abgebildete Verkehrszeichen als konkretes Verkehrszeichen identifiziert. Über die Anzeige- und Warneinheit 28 wird die Abbildung des Verkehrszeichens und/oder ein diesem Verkehrszeichen entsprechendes Symbol angezeigt.

Zusätzlich oder alternativ kann auch eine Textinformation und/oder eine akustische Information ausgegeben werden. Ferner wird eine Verkehrsinformation insbesondere über eine Geschwindigkeitsbegrenzung oder eine Mindestgeschwindigkeit an die Geschwindigkeitsregel- und/oder Begrenzungssteuerung 30 übergeben, wobei die Geschwindigkeitsregel- und/oder Begrenzungssteuerung 30 ein Warnsignal bei Überschreitung der zulässigen Höchstgeschwindigkeit und/oder Unterschreitung einer Mindestgeschwindigkeit ausgeben kann. Alternativ können die Geschwindigkeitsbegrenzungen als maximale Begrenzungswerte einer Geschwindigkeitsregelung und/oder Begrenzung ggf. mit einem Offset zugrunde gelegt werden.

Ein weiteres Verarbeitungs- und Steuerungsmodul 16a bis 16d der Bildverarbeitungseinheit 14 kann aufgrund der Abbildungen der Bildfolge die aktuelle Fahrspur des Fahrzeugs ermitteln. Ein weiteres Verarbeitungsmodul 16a bis 16d kann die einer der ermittelten Fahrspuren eindeutig zuordenbaren Verkehrszeichen nur dieser Fahrspur zuordnen, wobei diese nur einer Fahrspur zugeordneten Verkehrszeichen zusammen mit der Fahrspurinformation im Permanentspeicher 32 gespeichert werden können. Ferner können in dem Permanentspeicher 32 Vergleichsdaten für einen Mustervergleich zur Erkennung von Verkehrsschildern, insbesondere länderspezifische Muster von Verkehrszeichen, Symbole, die anstatt der Abbildungen der erkannten Verkehrszeichen auf der Anzeigeeinheit 28 ausgegeben werden können, sowie auszugebende Texte und/oder akustische Informationen gespeichert werden.

Ein weiteres Verarbeitungs- und Steuerungsmodul 16a bis 16d überprüft, ob ein detektiertes Verkehrszeichen mindestens ein für eine Region signifikantes Merkmal aufweist. Wird ein solches signifikantes Merkmal ermittelt, wird die diesem ermittelten Merkmal zugeordnete Region ermittelt und als aktuelle Region festgelegt. Ausgehend von dieser festgelegten Region wird zur Erkennung des detektierten Verkehrszeichens und/oder mindestens eines weiteren detektierten Verkehrszeichens mindestens ein dieser Region zugeordnetes Klassifizierungsmerkmal und/oder mindestens ein dieser Region zugeordnetes Klassifizierungsverfahren festgelegt und zur Klassifizierung genutzt.

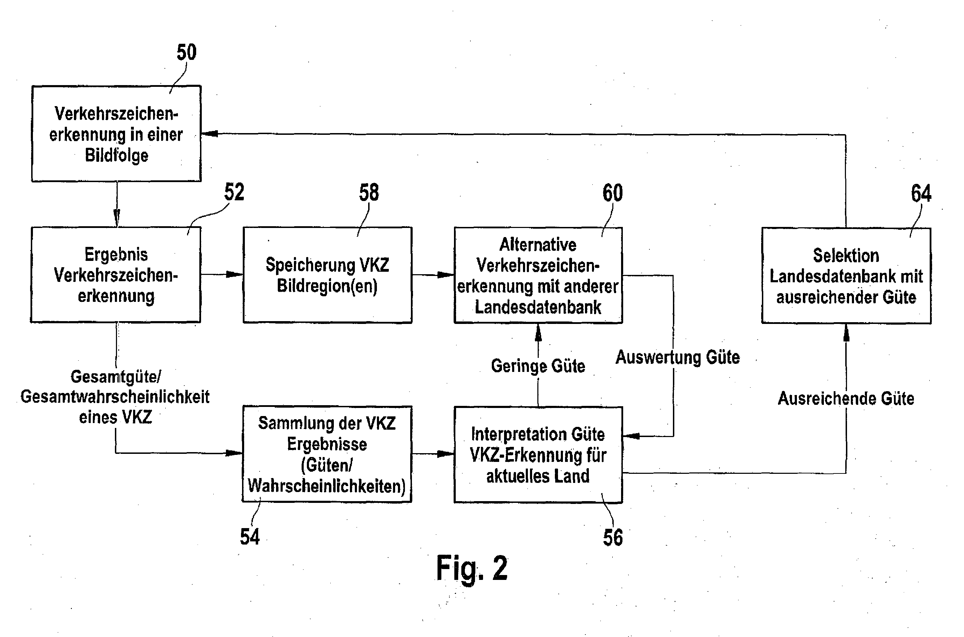

In Figur 2 ist ein Blockdiagramm mit Funktionsblöcken zum Durchführen einer länderspezifischen Verkehrszeichenerkennung gemäß einer ersten Ausführungsform der Erfindung gezeigt. Aufgrund der bereitgestellten Bilddaten einer Bildfolge wird durch den Funktionsblock 50 eine Verkehrszeichenerkennung durchgeführt wobei zur Verkehrszeichenerkennung eine länderspezifische Verkehrszeichendatenbank mit zumindest teilweise länderspezifischen Klassifizierungsmerkmalen und/oder zumindest teilweise länderspezifischen Klassifizierungsverfahren bzw. Programmdaten zum Bereitstellen dieser Klassifizierungsverfahren genutzt wird. Die länderspezifische Datenbank umfasst vorzugsweise Klassifizierungsverfahren und Klassifizierungsmerkmale zum Klassifizieren aller in einem voreingestellten Land vorkommenden standardisierten zumindest für ein konkretes Fahrzeug relevanten Verkehrszeichen. Vorzugsweise ist ein Land voreingestellt. Abhängig von diesem voreingestellten Land wird die diesem Land zugeordnete länderspezifische Verkehrszeichendatenbank geladen und zur Verkehrszeichenerkennung genutzt.

Durch den Funktionsblock 52 wird das Ergebnis der Verkehrszeichenerkennung ermittelt und die über mehrere Einzelbilder der Bildfolge ermittelte Gesamtgüte bzw. Gesamtwahrscheinlichkeit eines erkannten Verkehrszeichens dem Funktionsblock 54 als Ergebnis übergeben, der die Ergebnisse der Güten bzw. Wahrscheinlichkeiten von erkannten Verkehrszeichen sammelt und speichert. Der Funktionsblock 56 überprüft, ob aufgrund der gesammelten Güten und Wahrscheinlichkeiten von mehreren nacheinander erkannten Verkehrszeichen mit einer voreingestellten landesspezifischen Verkehrszeichendatenbank, in der konkrete für dieses Land spezifizierte Klassifizierungsmerkmale und/oder Klassifizierungsverfahren gespeichert sind, eine ausreichende Güte aufweisen oder nicht.

Zusätzlich werden die Bildregionen der Bilder der Bildfolge, die vom Funktionsblock 50 zur Verkehrszeichenerkennung genutzt wurden, durch den Funktionsblock 58 gespeichert, sodass sie für weitere Verkehrszeichenerkennungen mit alternativen landesspezifischen Verkehrszeichendatenbanken zur Verfügung stehen. Ermittelt der Funktionsblock 56, dass die Verkehrszeichenerkennung eine geringe Güte aufweist, wird mit Hilfe der durch den Funktionsblock 58 gespeicherten Bildregionen mit detektierten Verkehrszeichen die Verkehrszeichenerkennung mit einer weiteren alternativen landesspezifischen Verkehrszeichendatenbank durch den Funktionsblock 60 wiederholt durchgeführt. Die dabei ermittelten Güten und Wahrscheinlichkeiten werden dem Funktionsblock 56 übergeben, durch den die mit der weiteren alternativen landesspezifischen Verkehrszeichendatenbank ermittelten Wahrscheinlichkeiten und Güten interpretiert werden. Wird wiederholt nur eine geringe Erkennungsgüte festgestellt, wird dieser Ablauf mit weiteren landesspezifischen Verkehrszeichendatenbanken solange wiederholt, bis durch den Funktionsblock 56 festgestellt wird, dass das Ergebnis der Verkehrszeichenerkennung eine ausreichende Güte aufweist, wobei dann durch den Funktionsblock 64 die landesspezifische Verkehrszeichendatenbank für weitere Verkehrszeichenerkennungen voreingestellt wird, für die bei der Verkehrszeichenerkennung zumindest eine ausreichende und/oder die beste Güte ermittelt worden ist. Wird mit keiner verfügbaren landesspezifischen Verkehrszeichendatenbank eine ausreichende Güte erreicht, kann eine entsprechende Fehlermeldung ausgegeben werden und/oder es wird der Fahrzeugführer über einen entsprechenden Dialog aufgefordert, eine Länderkennung einzugeben und/oder das Land einzugeben, in dem sich das Fahrzeug aktuell befindet.

Alternativ kann nach der wiederholten Verkehrszeichenerkennung mit einer weiteren landesspezifischen Verkehrszeichendatenbank durch den Funktionsblock 60 zum Funktionsblock 54 verzweigt werden, in dem die ermittelten Güten und Wahrscheinlichkeiten gespeichert werden, wobei dann vom Funktionsblock 54 weiter zum Funktionsblock 56 verzweigt wird. Die wiederholte Verkehrszeichenerkennung mit einer weiteren landesspezifischen Verkehrszeichendatenbank durch den Funktionsblock 60 mit Hilfe der gespeicherten Bilddaten erfolgt beim Ausführungsbeispiel nach Figur 1 in Zeiträumen, in denen keine Güten und Wahrscheinlichkeiten von detektierten Verkehrszeichen zu bestimmen sind, insbesondere dann, wenn in aufgenommenen Bildern einer Bildfolge keine Verkehrszeichen im Block 50 detektiert werden.

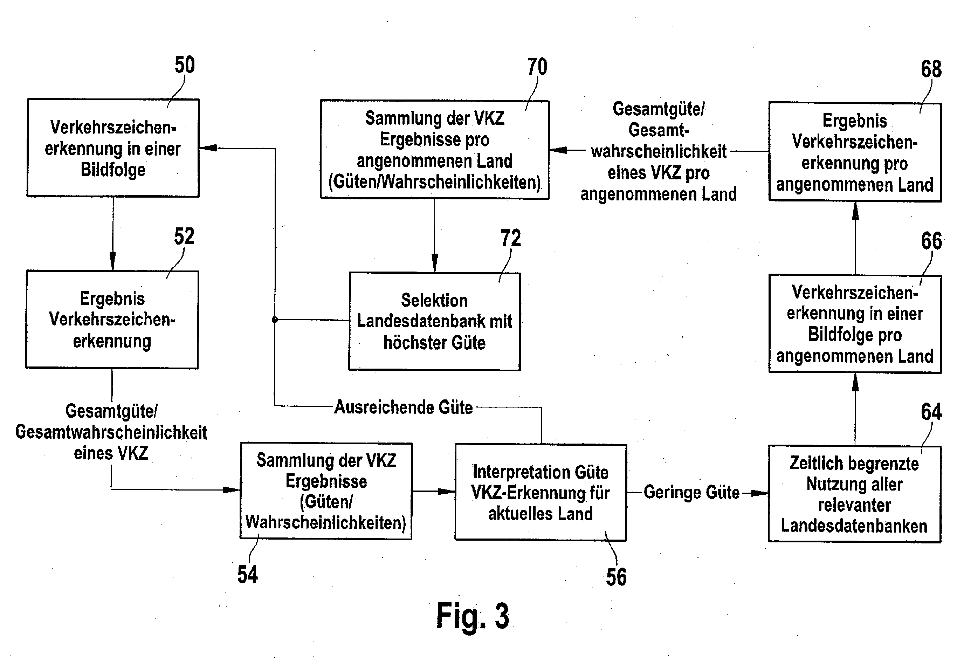

In Figur 3 ist ein Blockdiagramm mit Funktionsblöcken zum Durchführen einer länderspezifischen Verkehrszeichenerkennung ähnlich dem Blockdiagramm nach Figur 2 gemäß einer zweiten Ausführungsform der Erfindung dargestellt. Gleiche Elemente haben dieselben Bezugszeichen. Im Unterschied zu dem Blockdiagramm nach Figur 2 erfolgt beim Blockdiagramm nach Figur 3 die alternative Verkehrszeichenerkennung mit einer weiteren landesspezifischen Verkehrszeichendatenbank parallel zur Erkennung von Verkehrszeichen mit einer aktuell voreingestellten landesspezifischen Verkehrszeichendatenbank. In gleicher Weise wie in Figur 1 wird mit Hilfe einer voreingestellten landesspezifischen Verkehrszeichendatenbank durch den Funktionsblock 50 eine Verkehrszeichenerkennung mit Hilfe von Bilddaten mehrerer Bilder einer Bildfolge durchgeführt. Durch den Funktionsblock 52 wird als Ergebnis der Verkehrszeichenerkennung die Gesamtgüte bzw. Gesamtwahrscheinlichkeit der Verkehrszeichenerkennung für ein Verkehrszeichen bestimmt und dem Funktionsblock 54 übermittelt, der die Güten und Wahrscheinlichkeiten von Verkehrszeichenerkennungen sammelt und speichert. Anschließend wird die ermittelte Gesamtwahrscheinlichkeit bzw. Erkennungsgüte für eine bestimmte Menge von Verkehrszeichen für das voreingestellte Land durch den Funktionsblock 56 interpretiert, insbesondere mit einem Wahrscheinlichkeitsgrenzwert verglichen.

Ermittelt der Funktionsblock 56, dass eine ausreichende Güte der Verkehrszeichenerkennung vorhanden ist, wird zum Funktionsblock 50 verzweigt, sodass der Funktionsblock 50 weitere Verkehrszeichenerkennungen mit der aktuell voreingestellten landesspezifischen Verkehrszeichendatenbank durchführt. Stellt der Funktionsblock 56 jedoch fest, dass das Verkehrszeichen mit einer geringen Güte erkannt worden ist, werden durch den Funktionsblock 64 weitere landesspezifische Verkehrszeichendatenbanken zur Verkehrszeichenerkennung mit denselben Bilddaten herangezogen. Diese Bilddaten umfassen zumindest die Bildbereiche, in denen Verkehrszeichen vorzugsweise mit Hilfe einer Vorklassifizierung detektiert worden sind und die bereits als Grundlage zur Verkehrszeichenerkennung durch den Funktionsblock 50 genutzt worden sind.

Durch den Funktionsblock 66 wird dann ausgehend von diesen Bilddaten vorzugsweise für jedes Land, für das eine landesspezifische Verkehrszeichendatenbank vorhanden ist, eine Verkehrszeichenerkennung durchgeführt und durch den Funktionsblock 68 als Ergebnis der Verkehrszeichenerkennung für jedes Land jeweils die Gesamtgüte bzw. die Gesamtwahrscheinlichkeit für mindestens ein Verkehrszeichen ermittelt. Das Ergebnis wird dann dem Funktionsblock 70 zugeführt, der die Ergebnisse dem jeweiligen Land zugeordnet sammelt und speichert. Durch den Funktionsblock 72 wird die landesspezifische Verkehrszeichendatenbank ermittelt, in der die Klassifizierungsmerkmale und/oder Klassifizierungsverfahren gespeichert sind, mit denen die höchste Erkennungsgüte ermittelt worden ist. Diese landesspezifische Verkehrszeichendatenbank wird dann zur weiteren Verkehrszeichenerkennung im System voreingestellt, sodass diese landesspezifische Verkehrszeichendatenbank zur weiteren Erkennung von Verkehrszeichen durch den Funktionsblock 50 genutzt wird. Durch das Ermitteln der landesspezifischen Verkehrszeichendatenbank wird somit die Region bzw. das Land ermittelt, in dem sich das Fahrzeug mit der höchsten ermittelten Wahrscheinlichkeit befindet.

Durch die in den Ausführungsbeispielen aufgezeigten Möglichkeiten zum Ermitteln der Region bzw. des Landes in der bzw. in dem sich das Fahrzeug aktuell befindet kann diese Information auch ohne eine Landes- bzw. Regionsinformation von einem Navigationssystem ermittelt und zur Verkehrszeichenerkennung genutzt werden. Dies ist insbesondere dann erforderlich, wenn kein Datenaustausch zwischen einem Navigationssystem eines Fahrzeugs und dem System zur Verkehrszeichenerkennung vorhanden ist, beispielsweise bei der Verwendung von mobilen Navigationssystemen. Ferner fehlt eine Navigationsinformation auch dann, wenn das Navigationssystem ausgefallen ist oder die Kartendaten für die Region, in dem sich das Fahrzeug aktuell befindet, nicht verfügbar sind. Bei der Überschreitung einer Landesgrenze kann durch die beschriebene Vorgehensweise automatisch auf die relevante landesspezifische Verkehrszeichendatenbank gewechselt werden, in der insbesondere Klassifikationsmerkmale und/oder Klassifikationsverfahren gespeichert sind. Zumindest ein Teil dieser Klassifikationsmerkmale und/oder Klassifikationsverfahren sind speziell auf die Verkehrszeichen des Landes bzw. der Region abgestimmt. Durch das Vorsehen spezieller landesspezifischer Verkehrszeichendatenbanken kann die Erkennungsqualität zumindest für einzelne Länder erheblich verbessert werden, wobei nur ein relativ geringer Verarbeitungsaufwand erforderlich ist, da nicht für jede Verkehrszeichenerkennung alle möglichen landesspezifischen Verkehrszeichendatenbanken zur Erkennung herangezogen werden müssen. Vorzugsweise wird eine neu ermittelte Region bzw. ein neu ermitteltes Land durch die wiederholte Erkennung mehrerer Verkehrszeichen verifiziert, um eine statistische Absicherung des Ergebnisses der Regionserkennung bzw. Landeserkennung zu erreichen. Insbesondere wird eine voreingestellte Region erst dann durch eine neue Region voreingestellt, wenn eine Mindestanzahl von lokalisierten und verarbeiteten Verkehrszeichen ermittelt worden ist.

Nach dem Überfahren einer für eine spezielle Verkehrszeichenklasse relewanten Landesgrenze wird sich die ermittelte Wahrscheinlichkeit des erkannten Verkehrszeichens verringern und im Einzelfall wird die ermittelte Wahrscheinlichkeit gegen Null gehen. Dies ist beispielsweise dann der Fall, wenn es sich bei dem Verkehrszeichen um ein Überholverbotszeichen für Lastkraftwagen handelt und das Fahrzeug eine Landesgrenze passiert, wobei im ursprünglichen Land Rechtsverkehr und im neuen Land Linksverkehr herrscht oder umgekehrt, sodass sich die Überholverbotszeichen unterscheiden. Jedoch treten beispielsweise auch Unterschiede in der Schriftart und/oder Schriftgröße von Verbots- und Gebotszeichen zur Geschwindigkeitsbegrenzung auf, die erheblichen Einfluss auf die Erkennunggüte der Verkehrszeichenerkennung haben.

Durch die beschriebene Vorgehensweise erfolgt somit die automatische Erkennung des Landes bzw. der Region, in dem bzw. in der sich das Fahrzeug aktuell befindet. Diese automatische Erkennung basiert auf der Güte der Verkehrszeichenerkennung, ohne dass auf eine Navigationsinformation zurückgegriffen werden muss. Wie in den Ausführungsbeispielen aufgezeigt, kann das Verfahren zum Ermitteln der Region bzw. des Landes, in dem sich das Fahrzeug aktuell befindet, fortlaufend durchgeführt werden oder nur dann, wenn die Güte der Verkehrszeichenerkennung bzw. der Verkehrszeichenklassifikation einen voreingestellten Grenzwert unterschreitet. Dieser Grenzwert wird beispielsweise dann unterschritten, wenn eine voreingestellte Menge von klassifizierten Verkehrszeichen einen voreingestellten Wahrscheinlichkeitswert unterschreitet oder wenn eine voreingestellte Menge von detektierten Verkehrszeichen basierend auf der durch die voreingestellte Region ausgewählten landesspezifisehen Verkehrszeichendatenbank nicht klassifiziert werden kann. Als landesspezifische Verkehrszeichendatenbank im Sinne der Erfindung wird auch ein landesspezifischer Datensatz oder mehrere landesspezifische Datensätze angesehen, die durch ein Datenbanksystem bereitgestellt und/oder in einem Permanentspeicher des Fahrzeugs gespeichert sind.

## Patentansprüche

1. Verfahren zur Verkehrszeichenerkennung,
bei dem mindestens ein signifikantes Merkmal für ein Verkehrszeichen ermittelt wird, wobei das Verkehrszeichen für eine Region standardisiert ist,
die dem ermittelten Merkmal entsprechende Region bestimmt wird,
mindestens ein Klassifizierungsmerkmal und/oder mindestens ein Klassifizierungsverfahren abhängig von der bestimmten Region zur Erkennung des Verkehrszeichens und/oder mindestens eines weiteren Verkehrszeichens festgelegt wird,
bei dem die Erkennung des Verkehrszeichens und/oder des mindestens eines weiteren Verkehrszeichens unter Verwendung des festgelegten Klassifizierungsmerkmals und/oder des festegelegten Klassifizierungsverfahrens durchgeführt wird.

2. Verfahren nach Anspruch 1, **dadurch gekennzeichnet, dass** das Merkmal für mehrere für diese Region standardisierte Verkehrszeichen signifikant ist und/oder dass für mehrere für diese Region standardisierte Verkehrszeichen jeweils ein signifikantes Merkmal ermittelt wird, wobei die Verkehrszeichen vorzugsweise voneinander verschiedene Rechtsvorschriften angeben.

3. Verfahren nach Anspruch 2, **dadurch gekennzeichnet, dass** für mindestens zwei Verkehrszeichen mindestens jeweils ein für dieses Verkehrszeichen signifikantes Merkmal ermittelt wird, wobei die Region mit Hilfe der ermittelten Merkmale bestimmt wird.

4. Verfahren nach einem der vorhergehenden Ansprüche, **dadurch gekennzeichnet, dass** als signifikantes Merkmal Größe des Verkehrszeichens, Schriftart, Symbolausprägung und/oder Größe von Zeichen, die auf dem Verkehrszeichen dargestellt sind, mindestens eine Farbe, eine Reflektionseigenschaft und/oder mindestens eine Eigenschaft eines Haltemittels zum Halten des Verkehrszeichens genutzt wird.

5. Verfahren nach einem der vorhergehenden Ansprüche, **dadurch gekennzeichnet, dass** ausgehend von bereitgestellten Bilddaten mindestens eines Bildes mit einer Abbildung mindestens eines Bereichs der Umgebung eines Fahrzeugs mindestens ein in diesem Bereich vorhandenes Verkehrszeichen ermittelt wird.

6. Verfahren nach Anspruch 5, **dadurch gekennzeichnet, dass** das Verkehrszeichen bei einer Verarbeitung der bereitgestellten Bilddaten als Objekt detektiert und mit Hilfe eine Vorklassifizierungsverfahrens als Verkehrszeichen vorklassifiziert wird, wobei das Objekt vorzugsweise über mehrere Bilder nachverfolgt wird.

7. Verfahren nach einem der vorhergehenden Ansprüche, **dadurch gekennzeichnet, dass** jeweils einer Region zugeordnete Daten mit dem mindestens einen für die jeweilige Region spezifizierten Klassifizierungsmerkmal und/oder jeweils einer Region zugeordnete Programmdaten zum Bereitstellen mindestens eines für die jeweilige Region spezifizierten Klassifizierungsverfahrens zur Erkennung des und/oder mindestens eines weiteren Verkehrszeichens von einer Datenverarbeitungseinheit vorgehalten werden, wobei mindestens zwei voneinander verschiedene Regionen vorgesehen sind.

8. Verfahren nach einem der vorhergehenden Ansprüche, **dadurch gekennzeichnet, dass** für mindestens zwei voneinander verschiedene Regionen der jeweiligen Region zugeordnete Daten gespeichert werden und dass nur die Daten zur Klassifizierung des Verkehrszeichens genutzt und/oder geladen werden, die der ermittelten Region zugeordnet sind, wobei vorzugsweise für jede Region ein Datensatz gespeichert wird, der bei der Auswahl bzw. Voreinstellung dieser Region zum Klassifizieren von Verkehrszeichen genutzt wird.

9. Verfahren nach einem der vorhergehenden Ansprüche, **dadurch gekennzeichnet, dass** für mindestens zwei Regionen jeweils die Wahrscheinlichkeit ermittelt wird, ob es sich aufgrund der ermittelten Merkmale um diese Region handelt, wobei vorzugsweise die Region mit der höchsten ermittelten Wahrscheinlichkeit als aktuelle Region voreingestellt wird.

10. Verfahren nach einem der vorhergehenden Ansprüche, **dadurch gekennzeichnet, dass** ein bereits mit einer voreingestellten ersten Region klassifiziertes Verkehrszeichen erneut mit einer weiteren voreingestellten zweiten Region klassifiziert wird, wobei überprüft wird, ob das Verkehrszeichen bei der Klassifizierung mit der weiteren voreingestellten zweiten Region mit einer höheren Wahrscheinlichkeit klassifiziert wird als beim Klassifizieren mit der ersten voreingestellten Region.

11. Verfahren nach Anspruch 10, **dadurch gekennzeichnet, dass** dieses wiederholte Klassifizieren des Verkehrszeichens der voreingestellten zweiten Region mit denselben bereitgestellten Bilddaten erfolgt, wie das Klassifizieren mit der ersten voreingestellten Region, wobei das wiederholte Klassifizieren des Verkehrszeichens vorzugsweise in einem Zeitraum durchgeführt wird, in dem keine weiteren Verkehrszeichen zu klassifizieren sind, insbesondere wenn in den aufgenommenen Bildern kein Verkehrszeichen detektiert wird.

12. Vorrichtung zur Verkehrszeichenerkennung,
mit einem Bildaufnahmesystem zum Erzeugen von Bilddaten mindestens eines Bildes mit einer Abbildung mindestens eines Bereichs der Umgebung eines Fahrzeugs,
mit einer Verarbeitungseinheit, die die Bilddaten verarbeitet und mindestens ein in dem von der Abbildung umfassten Bereich vorhandenes Verkehrszeichen ermittelt,
wobei die Verarbeitungseinheit mindestens ein signifikantes Merkmal für das Verkehrszeichen ermittelt, wobei das Verkehrszeichen für eine Region standardisiert ist,
wobei die Verarbeitungseinheit die dem ermittelten Merkmal entsprechende Region bestimmt,
wobei die Verarbeitungseinheit mindestens ein Klassifizierungsmerkmal und/oder mindestens ein Klassifizierungsverfahren abhängig von der bestimmten Region zur Erkennung des und/oder mindestens eines weiteren Verkehrszeichens ermittelt,
und wobei die Verarbeitungseinheit die Erkennung des und/oder mindestens eines weiteren Verkehrszeichens unter Verwendung des festgelegten Klassifizierungsmerkmals und/oder des festgelegten Klassifizierungsverfahrens durchführt.

## Claims

1. A method for traffic sign recognition,
in which at least one significant feature is determined for a traffic sign, wherein the traffic sign is standardized for a region,
the region corresponding to the determined feature is determined,
at least one classification feature and/or at least one classification method is defined dependent on the determined region for recognition of the traffic sign and/or at least one further traffic sign,
in which the recognition of the traffic sign and/or the at least one further traffic sign is performed using the defined classification feature and/or the defined classification method.

2. The method according to claim 1, **characterized in that** the feature is significant for several traffic signs standardized for this region and/or that for several traffic signs standardized for this region, one significant feature each is determined, wherein the traffic signs preferably indicate different legal provisions.

3. The method according to claim 2, **characterized in that** for at least two traffic signs each time at least one feature significant for this traffic sign is determined, wherein the region is determined with the aid of the determined features.

4. The method according to one of the preceding claims, **characterized in that** as a significant feature the size of the traffic sign, the type style, the symbol design and/or the size of characters illustrated on the traffic sign, at least one color, a reflection characteristic and/or at least one characteristic of a holding means for holding the traffic sign is used.

5. The method according to one of the preceding claims, **characterized in that** based on provided image data of at least one image with a representation of at least an area of the surroundings of a vehicle at least one traffic sign present in this area is determined.

6. The method according to claim 5, **characterized in that** the traffic sign is detected as an object when the provided image data are processed and is pre-classified as a traffic sign by means of a pre-classification method, wherein the object is preferably tracked over several images.

7. The method according to one of the preceding claims, **characterized in that** each time region-assigned data with the at least one classification feature specified for the respective region and/or each time region-assigned program data for providing at least one region-specified classification method for the recognition of the traffic sign and/or at least one further traffic sign are stored by a data processing unit, wherein at least two different regions are provided.

8. The method according to one of the preceding claims, **characterized in that** for at least two different regions, data assigned to the respective region are stored and that only those data are used and/or loaded for the classification of the traffic sign which are assigned to the determined region, wherein preferably for each region a data set is stored which is used in the selection or the presetting of this region for the classification of traffic signs.

9. The method according to one of the preceding claims, **characterized in that** for at least two regions each time the probability is determined whether, on the basis of the determined features, this region is concerned, wherein preferably the region with the highest determined probability is preset as a current region.

10. The method according to one of the preceding claims, **characterized in that** a traffic sign already classified with a preset first region is classified again with a further preset second region, wherein it is checked whether the traffic sign is classified with a higher probability when classified with the further preset second region than when classified with the first preset region.

11. The method according to claim 10, **characterized in that** this repeated classification of the traffic sign of the preset second region is performed with the same provided image data as the classification with the first preset region, wherein the repeated classification of the traffic sign is preferably performed in a period of time in which no further traffic signs are to be classified, in particular when no traffic sign is detected in the captured images.

12. A device for traffic sign recognition, comprising
an image capturing system for generating image data of at least one image with a representation of at least an area of the surroundings of a vehicle,
a processing unit which processes the image data and determines at least one traffic sign present in the area comprised by the representation,
wherein the processing unit determines at least one significant feature for the traffic sign, wherein the traffic sign is standardized for a region,
wherein the processing unit determines the region corresponding to the determined feature,
wherein the processing unit determines at least one classification feature and/or at least one classification method dependent on the determined region for the recognition of the and/or at least one further traffic sign,
and wherein the processing unit executes the recognition of the and/or at least one further traffic sign by using the defined classification feature and/or the defined classification method.

## Revendications

1. Procédé de reconnaissance de panneaux de signalisation routière,
selon lequel au moins une caractéristique significative est déterminée pour un panneau de signalisation, le panneau de signalisation étant normalisé pour une région,
la région correspondant à la caractéristique trouvée est déterminée,
au moins une caractéristique de classification et/ou au moins un procédé de classification sont établis en fonction de la région déterminée pour la reconnaissance du panneau de signalisation routière et/ou au moins d'un autre panneau de signalisation routière,
selon lequel la reconnaissance du panneau de signalisation routière et/ou au moins d'un autre panneau de signalisation routière est effectuée en utilisant la caractéristique de classification établie et/ou le procédé de classification établi.

2. Procédé selon la revendication 1, **caractérisé en ce que** la caractéristique est significative pour plusieurs panneaux de signalisation routière normalisés pour cette région et/ou **en ce que** respectivement une caractéristique significative est déterminée pour plusieurs panneaux de signalisation routière normalisés pour cette région, les panneaux de signalisation routière indiquant de préférence des législations différentes les unes des autres.

3. Procédé selon la revendication 2, **caractérisé en ce qu'**au moins respectivement une caractéristique significative pour ce panneau de signalisation routière est déterminée pour au moins deux panneaux de signalisation routière, la région étant déterminée à l'aide des caractéristiques trouvées.

4. Procédé selon l'une quelconque des revendications précédentes, **caractérisé en ce que** la dimension du panneau de signalisation routière, le type de caractères, le relief du symbole et/ou la dimension du panneau, lesquels sont représentés sur le panneau de signalisation routière, au moins une couleur, une propriété de réflexion et/ou au moins une propriété d'un moyen de support permettant de porter le panneau de signalisation routière étant utilisés comme caractéristique significative.

5. Procédé selon l'une quelconque des revendications précédentes, **caractérisé en ce qu'**à partir des données d'image fournies d'au moins une image présentant une reproduction d'au moins une zone des environs d'un véhicule, au moins un panneau de signalisation routière présent dans cette zone est déterminé.

6. Procédé selon la revendication 5, **caractérisé en ce que** le panneau de signalisation routière, lors d'un traitement des données d'images fournies, est détecté comme objet et pré-classifié en tant que panneau de signalisation routière à l'aide d'un procédé de pré-classification, l'objet étant suivi de préférence par l'intermédiaire de plusieurs images.

7. Procédé selon l'une quelconque des revendications précédentes, **caractérisé en ce que** respectivement des données associées à une région présentant la ou les caractéristiques de classification spécifiées pour la région respective et/ou respectivement les données de programme associées à une région sont mises à disposition par une unité de traitement de données pour fournir au moins un procédé de classification spécifié pour la région respective permettant la reconnaissance de l'autre panneau de signalisation routière et/ou d'au moins un autre panneau de signalisation routière, au moins deux régions différentes l'une de l'autre étant prévues.

8. Procédé selon l'une quelconque des revendications précédentes, **caractérisé en ce que** pour au moins deux régions différentes l'une de l'autre, des données associées à la région respective sont mises en mémoire et **en ce que** seules les données permettant la classification du panneau de signalisation routière associées à la région trouvée sont utilisées et/ou chargées, un ensemble de données, lequel est utilisé pour la classification du panneau de signalisation routière lors du choix ou du préréglage de cette région, étant mis en mémoire de préférence pour chaque région.

9. Procédé selon l'une quelconque des revendications précédentes, **caractérisé en ce que**, pour au moins deux régions, on détermine la probabilité que sur la base des caractéristiques trouvées, il s'agit de cette région, la région présentant la probabilité déterminée la plus élevée étant de préférence préréglée comme région actuelle.

10. Procédé selon l'une quelconque des revendications précédentes, **caractérisé en ce qu'**un panneau de signalisation routière déjà classifié avec une première région préréglée est à nouveau classifié avec une autre seconde région préréglée, sachant qu'on vérifie si le panneau de signalisation routière lors de la classification avec l'autre seconde région préréglée associée à une probabilité plus élevée est classifié comme lors de la classification avec la première région préréglée.

11. Procédé selon la revendication 10, **caractérisé en ce que** cette classification répétée du panneau de signalisation routière de la seconde région préréglée est mise en oeuvre avec les mêmes données d'images fournies que la classification avec la première région préréglée, la classification répétée du panneau de signalisation routière étant effectuée de préférence dans un laps de temps au cours duquel aucun autre panneau de signalisation routière n'est à classifier, en particulier lorsqu'aucun panneau de signalisation routière n'est détecté dans les images acquises.

12. Dispositif servant à la reconnaissance de panneaux de signalisation routière,
comprenant un système d'acquisition d'images permettant de produire des données d'images au moins d'une image présentant une reproduction d'au moins une zone des environs d'un véhicule,
comprenant une unité de traitement, laquelle traite les données d'image et détermine au moins un panneau de signalisation routière présent dans la zone entourée par la reproduction,
l'unité de traitement déterminant au moins une caractéristique significative pour le panneau de signalisation routière, le panneau de signalisation routière étant normalisé pour une région,
l'unité de traitement déterminant la région correspondant à la caractéristique trouvée,
l'unité de traitement trouvant au moins une caractéristique de classification et/ou au moins un procédé de classification en fonction de la région déterminée pour la reconnaissance du panneau de signalisation routière et/ou au moins d'un autre panneau de signalisation routière,
et l'unité de traitement effectuant la reconnaissance du panneau de signalisation routière et/ou d'au moins un autre panneau de signalisation routière en utilisant la caractéristique de classification établie et/ou le procédé de classification établi.
